# EUROPÄISCHE PATENTSCHRIFT

(11) **EP 3 960 299 B1**
(45) Veröffentlichungstag und Bekanntmachung des Hinweises auf die Patenterteilung: **12.07.2023**
(21) Anmeldenummer: 21189424.1
(22) Anmeldetag: 03.08.2021
(51) Int. Cl.: B02C 18/18, F16B 33/00, F16B 5/06, F16B 5/02, F16B 37/12

(54) **SCHNEIDKRONENBEFESTIGUNG**
CUTTING TIP ATTACHMENT
FIXATION DE COURONNE DE COUPE

(30) Priorität: 31.08.2020 DE 102020122655
(43) Veröffentlichungstag der Anmeldung: 02.03.2022
(73) Patentinhaber: Vecoplan AG, 56470 Bad Marienberg (DE)
(72) Erfinder: Pink, Florian, 56472 Stockhausen-Illfurth (DE)
(74) Vertreter: Lippert Stachow Patentanwälte Rechtsanwälte

(56) Entgegenhaltungen:
- DE-U1-202015 107 131

## Beschreibung

Die Erfindung betrifft eine Schneidkronenbefestigung zur formschlüssigen und verdrehsicheren Befestigung einer Schneidkrone an einer dieser zugeordneten Halterung einer Zerkleinerungsvorrichtung, insbesondere an einem Rotor einer Zerkleinerungsvorrichtung, umfassend eine Schneidkrone, eine der Schneidkrone zugeordnete Schneidkronenhalterung, einen Schraubbolzen und einen Gewindeeinsatz mit einem Kopfabschnitt und einem Schaftabschnitt, wobei der Gewindeeinsatz ein zu dem Außengewinde des Schraubbolzens komplementäres Innengewinde aufweist und die Schneidkronenhalterung Durchführung zur Aufnahme des Schraubbolzens aufweist, und in Einbaulage der Gewindeeinsatz in axialer und tangentialer Richtung, letztere auch Umfangsrichtung genannt, formschlüssig in einer Halteausnehmung der diesem zugeordneten Schneidkrone angeordnet ist.

Derartige Schneidkronenbefestigungen werden beispielsweise in Zerkleinerungsvorrichtungen in der Abfallentsorgung, der Recyclingindustrie oder im Bereich der Aufbereitung von Produktionsabfällen, insbesondere zur Zerkleinerung von Holz, Kunststoff oder Müll und darüber hinaus auch in Werkzeugen wie z.B. Schälmaschinen, Hobeln etc. zur Bearbeitung von Oberflächen von Gegenständen eingesetzt. Je nach Ausführungsform werden in der Regel Schneidkronenhalterungen solcher Schneidkronenbefestigungen an einem Zerkleinerungsrotor, beispielsweise unlösbar mittels einer Verschweißung oder lösbar mittels einer Verschraubung befestigt oder an einem drehbar angeordneten Schälarm endstämmig angeformt oder angeschweißt, wobei sich jeweils ein durch die Schneidkronenhalterung verlaufender Schraubbolzen durch die Schneidkrone hindurch in einen Gewindeeinsatz eingeschraubt sein kann, welcher ausgehend von der Spanseite der Schneidkrone in eine Halteausnehmung der Schneidkrone eingesetzt ist, sodass die Schneidkrone an der Schneidkronenhalterung gehalten ist. Eine gattungsbildende Schneidkronenbefestigung ist beispielsweise in der Offenlegungsschrift WO 2005/030447 A1 offenbart. Durch das Vorsehen eines Gewindeeinsatzes zur Befestigung der Schneidkrone an der Schneidkronenhalterung entfällt die Notwendigkeit, ein Gewinde in die Schneidkrone selbst einzudrehen. Da die Schneidkrone in der Regel zur Erhöhung der Standfestigkeit aus einem sprödharten Material hergestellt bzw. nach der Formgestaltung gehärtet wird, hat ein solches im Stand der Technik auch bekanntes Befestigungsgewinde in der Schneidkrone aufgrund der erhöhten Kerbwirkung eine erhöhte Bruchempfindlichkeit der Schneidkrone zur Folge.

Grundsätzlich besteht für die Gestaltung von Schneidkronenbefestigungen die Anforderung einer hohen Materialbeständigkeit bzw. Standfestigkeit der Schneidkrone, einer guten Sicherung der Schneidkrone gegenüber torsionalen Betriebskräften die zu einer Verdrehung zur Schneidkronenhalterung bzw. zum Rotor führen können, einer sicheren Aufnahme von axialen Kräften zur Bereitstellung einer Schneidkronenbefestigung sowie einer einfachen Austauschbarkeit der Schneidkrone bei Verschleiß oder Beschädigung.

Beispielhafte Schneidkronenbefestigungen werden in der DE 20 2015 107 131 U1, die die Präambel des Hauptanspruches offenbart, in Form einer Werkzeugbaugruppe beschrieben. Diese Werkzeugbaugruppe weist einen vorzugsweise einstückigen Messerträger auf, der eine Auflagefläche umfasst zur Auflage an einen am Rotor und durch welche sich eine gewindefreie Durchgangsbohrung erstreckt. Die Werkzeugbaugruppe umfasst ferner ein lösbar am Messerträger befestigtes Messer, welches eine gewindefreie Durchgangsbohrung aufweist, die sich zwischen zwei Grundflächen erstreckt und die an der Arbeitsfläche eine Ansenkung wie eine konusförmige Erweiterung aufweist. Das Messer liegt in Einbaulage direkt oder indirekt an der Anlagefläche des Messerträgers an, wobei eine Schraubverbindung zwischen Messer und Messerträger vorgesehen ist. Die Schraubverbindung umfasst einen, sich durch die Durchgangsbohrung des Messers und des Messerträgers erstreckenden Schraubbolzen mit einem kegelförmigen Kopf, der in der Ansenkung der Bohrung an der Arbeitsfläche des Messers zur Anlage kommt bzw. von dieser aufgenommen wird. Zur Befestigung des Messers an dem Messerträger ist eine Schraubenmutter mit einem hülsenartigen Grundkörper auf einem Abschnitt des Schraubbolzens aufgedreht, der sich über die Durchgangsbohrung des Messerträgers hinaus erstreckt.

In der gattungsbildenden Schneidkronenbefestigung der WO 2005/030447 A1 ist die Schneidkrone an einer, an einem Schälarm endstämmig angeformten Haltevorrichtung befestigt, wobei ein Gewindeeinsatz mit seinem Kopfteil einen Formschluss in axialer und tangentialer Richtung mit der Halteausnehmung der Schneidkrone bildet, in welche der Gewindeeinsatz eingesetzt ist. Ein Schraubbolzen ist dabei durch eine Durchführung der Haltevorrichtung bzw. Schneidkronenhalterung in den Gewindeeinsatz eingeschraubt, wodurch die Schneidkrone an die Schneidkronenhaltevorrichtung gepresst ist. Auftretende Torsionskräfte und Axialkräfte werden von dem formschlüssig in die Halteausnehmung angepassten Kopfteil des Gewindeeinsatzes aufgenommen und in das Material der Schneidkrone eingeleitet.

Bei der obenstehenden beschriebenen gattungsbildenden Schneidkronenbefestigung unter Verwendung eines Gewindeeinsatzes werden sowohl axiale Haltekräfte und/oder axiale Betriebskräfte sowie in tangentialer Richtung, d.h. Umfangsrichtung auftretenden Betriebskräfte über den Kopfabschnitt des Gewindeeinsatzes auf die Schneidkrone eingeleitet. Je nach Gestaltungsform des Kopfabschnittes und entsprechender komplementärer Ausbildung der Halteausnehmung in der Schneidkrone können Kopfquerschnitte des Gewindeeinsatzes, welche Ecken aufweisen, bei komplementärer Gestaltung der Halteausnehmung der Schneidkrone in diesem Längsabschnitt eine starke Kerbwirkung nach sich ziehen, was zu Materialausbrüchen in der Schneidkrone in diesen Bereichen führen kann.

Der Erfindung liegt die Aufgabe zugrunde, eine Schneidkronenbefestigung bereitzustellen, bei welcher die Schneidkrone auswechselbar ist, wobei die Befestigung im Vergleich zu herkömmlichen Schneidkronenbefestigungen eine höhere Belastung der Schneidkronen ermöglicht, ohne dass die neue Gestaltung der erfindungsgemäßen Schneidkronenbefestigungen eine erhöhte Ausfallrate, insbesondere verbunden durch eine starke Kerbwirkung im Bereich der Halteausnehmung der Schneidkrone nach sich zieht.

Diese Aufgabe löst die vorliegende Erfindung durch eine Schneidkronenbefestigung mit den Merkmalen von Anspruch 1. Die erfindungsgemäße Schneidkronenbefestigung zur formschlüssigen und verdrehsicheren Befestigung einer Schneidkrone an einer dieser zugeordneten Halterung einer Zerkleinerungsvorrichtung, insbesondere an einem Rotor einer Zerkleinerungsvorrichtungen, umfasst eine Schneidkrone, eine der Schneidkrone zugeordnete Schneidkronenhalterung, einen Schraubbolzen und einen Gewindeeinsatz mit einem Kopfabschnitt und einen sich axial daran anschließenden Schaftabschnitt, wobei der Gewindeeinsatz ein zu dem Außengewinde des Schraubbolzens angepasstes bzw. komplementäres Innengewinde aufweist und die Schneidkronenhalterung eine Durchführung zur Aufnahme des Schraubbolzens aufweist, und in Einbaulage der Gewindeeinsatz in axialer und tangentialer Richtung formschlüssig, insbesondere ausgehend von der Spanseite der Schneidkrone, in einer Halteausnehmung der diesem zugeordneten Schneidkrone eingesetzt bzw. angeordnet ist. Die erfindungsgemäße Schneidkronenbefestigung zeichnet sich dadurch aus, dass die Formschlussgestaltung einer Außenmantelfläche des Gewindeeinsatzes zur Halteausnehmung der zugeordneten Schneidkrone im Wesentlichen über die gesamte, zumindest über 70 %, insbesondere zumindest über 80% der Längserstreckung des Gewindeeinsatzes verläuft, wobei der Gewindeeinsatz bzw. dessen äußere Begrenzungsfläche über die Längserstreckung seines Kopfabschnittes rotationssymmetrisch zur Bereitstellung eines axialen Formschlusses zur Halteausnehmung ausgebildet ist, und zumindest über einen Längsteilabschnitt eine konische Mantelfläche aufweist, die in Einbaulage mit einem komplementär gestalteten konischen Aufnahmeabschnitt der Halteausnehmung korrespondiert und der Gewindeeinsatz im Bereich der Längserstreckung des Schaftabschnittes, insbesondere im Wesentlichen über die gesamte Längserstreckung des Schaftabschnittes, nicht rotationssymmetrisch zur Bereitstellung eines Formschlusses in Umfangsrichtung, d.h. tangentialer Richtung zur Halteausnehmung ausgebildet ist. Ein solcher Formschluss in tangentialer Richtung bzw. in Umfangsrichtung wird auf dem Gebiet auch als rotatorischer Formschluss bezeichnet.

Der erfindungsgemäßen Schneidkronenbefestigung liegt bei einer Ausführungsform die grundsätzliche Idee zugrunde, bei Verwendung eines Gewindeeinsatzes in einer Halteausnehmung der Schneidkrone zu deren Befestigung an einer Schneidkronenhalterung den Kopf des Gewindeeinsatzes allein zur Bereitstellung eines axialen Formschlusses zwischen Gewindeeinsatz und Schneidkrone auszubilden sowie darüber hinaus den Schaft des Gewindeeinsatzes zur Bereitstellung eines rotatorischen Formschlusses im Sinne einer Verdrehsicherung zwischen Schneidkrone und Gewindeeinsatz vorzusehen bzw. zu gestalten und jeweilige zugeordnete Längsabschnitte der Halteausnehmung der Schneidkrone entsprechend, d.h. komplementär auszubilden. Mit dieser Vorgehensweise wird das Auftreten von Kerbkräften im Längsbereich der Halteausnehmung der Schneidkrone, welcher dem Kopfabschnitt des Gewindeeinsatzes zugeordnet ist, im Wesentlichen vermieden, da die Halteausnehmung in diesem Ausschnitt rotationssymmetrisch gestaltet ist und über den Kopf im Wesentlichen Druckkräfte in diesem Längsabschnitt der Schneidkrone auf diese übertragen werden. Dagegen kann die erfindungsgemäße Schneidkronenbefestigung ausgebildet sein, auftretende Tangentialkräfte bzw. Umfangskräfte über eine formschlüssige Verbindung der Schneidkrone mit dem Gewindeeinsatz im Axialbereich des Schaftes des Gewindeeinsatzes zu übertragen mit entsprechender komplementärer Ausbildung der Halteausnehmung der Schneidkrone in dem zugeordneten Längsabschnitt. Die beschriebene Trennung der Formschlussabschnitte zwischen Gewindeeinsatz und Schneidkrone zur Bereitstellung eines axialen und eines rotatorischen Formschlusses zwischen diesen Bauteilen hat zum einen den Vorteil, dass im Bereich der Spanfläche der Schneidkrone vergleichsweise geringe Kerbkräfte auftreten, während in tangentialer Richtung auftretende Betriebskräfte großflächig, vorzugsweise über die gesamte Längserstreckung des Gewindeeinsatzes in die Schneidkrone eingeleitet werden können. Die erfindungsgemäße Schneidkronenbefestigung hat insofern eine höhere Standzeit der Schneidkrone zur Folge, was den Wartungsaufwand für eine entsprechende Zerkleinerungsvorrichtung wesentlich vermindern kann.

Die Angabe "Schneidkrone" kann allgemein ein Schneidwerkzeug für eine Zerkleinerungsvorrichtung meinen, insbesondere ein plattenförmiges oder etwa quaderförmiges Schneidwerkzeug. Eine solche Schneidkrone kann insbesondere mittels der Schneidkronenhalterung an einem Rotor einer Zerkleinerungsvorrichtung befestigbar sein.

Die Angabe "Kopf" des Gewindeeinsatzes kann einen Längsabschnitt des Gewindeeinsatzes meinen, welcher in Einbaulage der Spanseite und/oder einer Schneidkante der Schneidkrone zugewandt bzw. der Schneidkronenhalterung abgewandt ist. Dieser Kopf des Gewindeeinsatzes kann sich dadurch auszeichnen, dass er zumindest in einem Längsteilabschnitt, insbesondere über seine gesamte Längserstreckung eine größere radiale Erstreckung als der Schaftabschnitt des Gewindeeinsatzes aufweist.

Die Angabe axiale, tangentiale bzw. radiale Richtung kann sich in Einbaulage der Bauteile der Schneidkronenbefestigung auf die Achse des Schraubbolzens bzw. eine Achse der mit einem Gewinde für den Schraubbolzen versehenen Durchführung des Gewindeeinsatzes, d.h. auf die Achse des Gewindes des Gewindeeinsatzes beziehen.

Die über zumindest einen Längsteilabschnitt des Kopfes des Gewindeeinsatzes gestaltete konische Mantelfläche kann so orientiert und ausgebildet sein, dass sich deren radiale Erstreckung in axialer Richtung zum Schaft des Gewindeeinsatzes verjüngt.

Weitere erfindungsgemäße Merkmale und Weiterbildungen der Erfindung sind in der allgemeinen Beschreibung, den Figuren, der Figurenbeschreibung sowie den Unteransprüchen angegeben.

Zur Optimierung der Übertragung tangentialer, d.h. rotatorischer und axialer Betriebskräfte zwischen Schneidkrone und Gewindeeinsatz kann zweckmäßigerweise vorgesehen sein, dass sich die Halteausnehmung von einer Oberfläche, insbesondere einer Spanfläche der Schneidkrone zu einer dieser gegenüberliegenden Oberfläche erstreckt. Damit kann über die gesamte Längserstreckung der Schneidkrone in Einbaulage der beschriebener Formschluss zwischen Schneidkrone und Gewindeeinsatz bereitgestellt werden zur Maximierung der den beschriebenen Formschluss bereitstellenden Anlageflächen der Schneidkrone, welche die besagte Halteausnehmung festlegen mit der Mantelfläche des Gewindeeinsatzes zur Minimierung einer jeweiligen Flächenbelastung.

Zur weiteren verbesserten Ableitung von auf die Schneidkronen wirkenden axialen Halte- und Betriebskräften auf den Gewindeeinsatz im Bereich von dessen Spanfläche(n) kann zweckmäßigerweise vorgesehen sein, dass der Kopfabschnitt des Gewindeeinsatzes in Längsrichtung einen in Einbaulage der Spanfläche der Schneidkrone zugewandten zylinderförmigen Abschnitt bzw. Außenmantelflächenabschnitt aufweist, an welchem sich in axialer Ausrichtung der konusförmige Abschnitt des Kopfabschnitts des Gewindeeinsatzes anschließen kann. In einer besonders zweckmäßigen Ausführungsform kann vorgesehen sein, dass die äußere Mantelfläche des Kopfabschnittes des Gewindeeinsatzes allein den zylinderförmigen, der Spanfläche der Schneidkrone zugewandten Abschnitt und einen einzelnen, sich axial daran anschließenden konusförmigen Abschnitt aufweist.

Vorzugsweise kann vorgesehen sein, dass der konusförmige Teillängsabschnitt des Kopfes des Gewindeeinsatzes eine radiale Verjüngung in Richtung zum Schaft des Gewindeeinsatzes aufweist, wobei die Verjüngung im Durchmesser in Bezug auf den maximalen Durchmesser des Kopfabschnittes zumindest 20%, insbesondere zumindest 25%, vorzugsweise zumindest 30% betragen kann.

Es kann vorgesehen sein, dass die Längserstreckung des Kopfabschnittes des Gewindeeinsatzes zumindest 30%, insbesondere zumindest 35 % der gesamten Längserstreckung des Gewindeeinsatz beträgt.

Es kann bei der Gestaltung der erfindungsgemäßen Schneidkronenbefestigung vorgesehen sein, dass der Gewindeeinsatz in Umfangsrichtung im Bereich seines Schaftes einen variablen Abstand seiner äußeren Mantelfläche senkrecht zur Achse seines Schraubgewindes aufweist zur Gestaltung der beschriebenen nichtrotationssymmetrischen äußeren Mantelfläche des Schaftabschnittes. Eine solche Gestaltung kann zur Erzeugung vorbestimmter Kraftübertragungsprofile und zur Bildung eines rotatorischen Formschlusses des Gewindeeinsatzes insbesondere im Bereich seines Schaftes gegenüber der Schneidkrone durch entsprechende komplementäre Ausbildung der Halteausnehmung der Schneidkrone zur äußeren Mantelfläche des Schaftes des Gewindeeinsatzes führen.

In einer Ausführungsform des Gewindeeinsatzes einer erfindungsgemäßen Schneidkronenbefestigung kann die Formschlussgestaltung des Schaftbereichs des Gewindeeinsatzes im Querschnitt zumindest abschnittsweise polygonförmig, insbesondere eine geschlossene Polygonform aufweisen, wobei Verbindungsecken zumindest teilweise abgerundet sein können, wodurch eine Kerbwirkung an komplementär ausgebildeten Abschnitten der die Halteausnehmung festlegenden Bereiche der Schneidkrone minimiert werden kann. Wie beschrieben kann grundsätzlich vorgesehen sein, dass die Formschlussgestaltung zwischen dem Schaftabschnitt des Gewindeeinsatzes und den zugeordneten, zumindest abschnittsweise komplementär gestalteten Abschnitten der Halteausnehmung der Schneidkrone allein zur Bereitstellung eines rotatorischen Formschlusses innerhalb diesen Längsabschnittes der Schneidkrone ausgebildet sind.

Es sei bemerkt, dass die Angabe "polygonförmig" bzw. "Polygonform" breit zu verstehen ist und insbesondere auch Streckenzüge umfasst, die nicht geradlinig, sondern gekrümmt sind. Beispielsweise kann sich die äußere Mantelfläche des Schaftes aus einer Mehrzahl von gekrümmten und in Umfangsrichtung aufeinanderfolgenden Flächenabschnitten zusammensetzen, wobei auch gerade bzw. ebene Flächenabschnitte umfasst sein können. Da diese aufeinanderfolgenden Umfangsflächen unterschiedliche Krümmungsradien aufweisen können, resultiert ein rotatorischer Formschluss mit dem zugeordneten und komplementär zu der Mantelfläche des Schaftes ausgebildeten Längsabschnitts der Halteausnehmung der Schneidkrone.

Es kann auch vorgesehen sein, dass innerhalb des Schaftabschnittes des Gewindeeinsatzes neben einem rotatorischen Formschluss auch ein axialer Formschluss mit komplementär gestalteten Abschnitten der Halteausnehmung der Schneidkrone bereitgestellt ist, um die Flächenbelastung in axialer Richtung weiter zu verringern. Insofern kann bei der Gestaltung der erfindungsgemäßen Schneidkronenbefestigung vorgesehen sein, dass der Gewindeeinsatz entlang der Längserstreckung seines Schaftabschnittes einen variablen Abstand seiner äu-βeren Mantelfläche senkrecht zur Achse seines Schraubgewindes aufweist. Eine solche Gestaltung kann neben der Ausbildung eines rotatorischen Formschlusses des Gewindeeinsatzes im Bereich seines Schaftes gegenüber der Schneidkrone zur zusätzlichen Bildung eines axialen Formschlusses des Gewindeeinsatzes im Bereich seines Schaftes gegenüber der Schneidkrone führen.

Wie dargestellt, kann jedoch auch vorgesehen sein, dass der Gewindeeinsatz in Einbaulage in der Längserstreckung seines Schaftes zu zugeordneten Abschnitten der Halteausnehmung in axialer Richtung formschlussfrei gestaltet ist, sodass die beiden axial aufeinanderfolgenden und in ihrer Formschlussfunktion unterschiedlichen Bereiche des Kopfabschnittes und des Schaftabschnittes des Gewindeeinsatzes sowie die jeweils zugeordneten, komplementär gestalteten Bereiche der Halteausnehmung der Schneidkrone jeweils optimiert gestaltbar sind, insbesondere in Bezug auf eine verminderte Kerbwirkung im Material der Schneidkrone sowie in Bezug auf eine optimierte Gestaltung zur Bereitstellung des axialen bzw. rotatorischen Formschlusses zwischen Gewindeeinsatz und Schneidkrone.

Es kann vorgesehen sein, dass die erfindungsgemäße Schneidkronenbefestigung so gestaltet ist, dass der Gewindeeinsatz in Einbaulage festsitzend, z.B. mittels Klemmen, Erzeugen eines Presssitzes, Verstemmen oder Kleben in der Halteausnehmung der Schneidkrone angeordnet bzw. eingesetzt ist, um eine relative Bewegung zwischen Schneidkrone und Gewindeeinsatz zu vermeiden und/oder die Montage zu erleichtern. Als Alternative kann auch vorgesehen sein, dass der Gewindeeinsatz in Einbaulage lose und axial entnehmbar nach Lösen der Befestigungsschraube in der Halteausnehmung der Schneidkrone eingesetzt ist.

Um eventuell an einer Spanfläche der Schneidkrone im Bereich der Halteausnehmung auftretende Betriebskräfte zu verringern, kann zweckmäßigerweise vorgesehen sein, dass der Gewindeeinsatz in Einbaulage an einem, zumindest einer Spanfläche der zugeordneten Schneidkrone zugewandten, Stirnseitenabschnitt eine Stirnfläche aufweist, welche eine Spanfläche der Schneidkrone stetig, insbesondere sprungfrei bzw. glatt, fortführt und/oder ergänzt. Neben der Vermeidung von unter Umständen die Standzeit der Schneidkrone vermindernden Betriebskräfte kann diese Maßnahme darüber hinaus das Schnittbild einer Schneidkrone mit im Wesentlichen durchgängiger Spanfläche bereitstellen.

Eine im Wesentlichen vollständig durchgängige Spanfläche kann in solchen Ausführungsformen bereitgestellt werden, bei welchen der Schraubbolzen der erfindungsgemäßen Schneidkronenbefestigung in Einbaulage an einem, einer Spanfläche der zugeordneten Schneidkrone zugewandten Stirnseitenabschnitt eine Stirnfläche bzw. Kopffläche aufweist, welche die Stirnfläche des Gewindeeinsatzes und damit die Spanfläche der Schneidkrone stetig fortführt und/oder ergänzt, um eine Spanführung zu optimieren.

Es kann vorgesehen sein, dass bei einer erfindungsgemäßen Schneidkronenbefestigung das Innengewinde des Gewindeeinsatzes, das komplementär zu dem Schraubbolzen ausgebildet ist, als Sacklochgewinde ausgeführt ist, wodurch das Eindringen von Schmutz oder Feuchtigkeit in das Innengewinde des Gewindeeinsatzes von der Spanseite der Schneidkrone aus verhindert wird und die endseitige Stirnseite des Gewindeeinsatzes in Einbaulage als Fortsatz einer Spanfläche der Schneidkrone ausgebildet sein kann, sodass eine durchgehende Spanfläche der Schneidkrone durch entsprechende Oberflächengestaltung der Stirnseite des Gewindeeinsatzes bereitgestellt werden kann, um eine Spanführung zu optimieren.

In einer vorteilhaften Ausführungsform der erfindungsgemäßen Schneidkronenbefestigung kann der Gewindeeinsatz und die zugeordnete Schneidkrone aus zueinander unterschiedlichen Materialien ausgebildet sein, wobei das Material des Gewindeeinsatzes eine zumindest 50% höhere, insbesondere eine zumindest doppelt so hohe Duktilität als das Material der Schneidkrone aufweisen kann. Durch eine höhere Duktilität des für den Gewindeeinsatz verwendeten Materials können auftretende Betriebskräfte, welche außerhalb der Spezifikation der Schneidkrone liegen, durch Verformen des Gewindeeinsatzes abgefangen werden, ohne dass die Schneidkrone Beschädigungen erleidet. Ein weiterer Aspekt der höheren Duktilität des für den Gewindeeinsatz verwendeten Materials im Vergleich zum Material der Schneidkrone besteht in der Möglichkeit, den Gewindeeinsatz in die Halteausnehmung der Schneidkrone einzupressen mit dem Resultat eines verbesserten, insbesondere großflächigen Formschlusses zwischen Gewindeeinsatz und Schneidkrone zur Kompensation eventueller Herstellungstoleranzen.

Es kann vorgesehen sein, dass die Längserstreckung des Kopfabschnittes des Gewindeeinsatzes zumindest 30%, insbesondere zumindest 35 % der gesamten Längserstreckung des Gewindeeinsatz beträgt.

Zweckmäßigerweise kann die Schneidkrone bei der erfindungsgemäß ausgebildeten Schneidkronenbefestigung in Einbaulage mit einer Stirnseitenfläche an einer zugeordneten Anlagefläche der Schneidkronenhalterung anliegen. Dabei kann die Anlagefläche der Schneidkronenhalterung als Sitz für die Schneidkrone ausgebildet sein, welche die Schneidkrone im Bereich ihrer der Schneidkronenhalterung zugewandten Stirnseite aufnimmt und wobei die gegenseitigen Anlageflächen so ausgebildet sind, dass in Einbaulage der Bauteile der erfindungsgemäßen Schneidkronenbefestigung eine relative Verdrehung der Schneidkrone zur Schneidkronenhalterung um die Gewindeachse des Gewindeeinsatzes formschlüssig verhindert ist. Beispielsweise kann der durch die Schneidkronenhalterung bereitgestellte Sitz keilförmig ausgebildet sein, in welchem die stirnseitig komplementär keilförmig ausgebildete Schneidkrone flächig anliegt, sodass durch die Verbolzung der Schneidkrone in der Schneidkronenhalterung eine Verdrehung der Schneidkrone in Einbaulage verhindert ist.

Die Erfindung wird im Folgenden durch das Beschreiben einer Ausführungsform nebst Abwandlungen durch Bezugnahme auf die beiliegenden Figuren erläutert, wobei
- Figur 1: in einer Schnittdarstellung mit zwei zueinander um 90° versetzten Teilschnitte einer Ausführungsform einer erfindungsgemäßen Schneidkronenbefestigung in einer perspektivischen Seitenansicht,
- Figur 2: die Ansicht der Figur 1 in einer Explosionsdarstellung,
- Figur 3a: eine perspektivische Seitendarstellung mit Blick auf den Schaft des Gewindeeinsatzes der Schneidkronenbefestigung der Figuren 1, 2
- Figur 3b: den Gewindeeinsatz der Figur 3a in einer perspektivischen Seitenansicht mit Blick auf den Kopf des Gewindeeinsatzes,
- Figur 3c: eine frontale Ansicht auf den Gewindeeinsatz der Figur 3a mit Blick auf den Schaft, und
- Figur 3d: eine Seitenansicht des Gewindeeinsatzes der Figur 3a
zeigt.

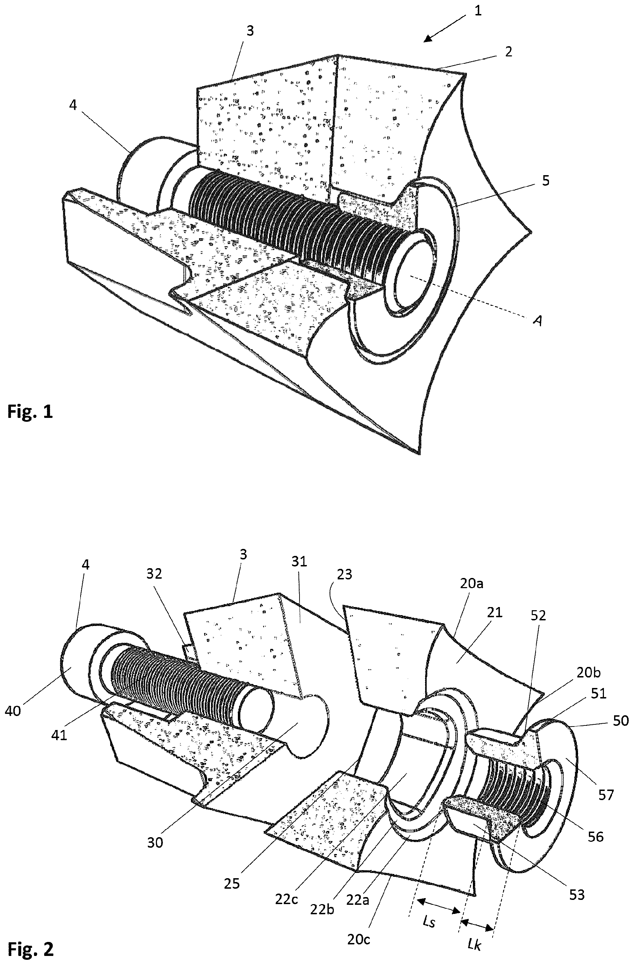

Figur 1 zeigt in einer perspektivischen Ansicht eine erfindungsgemäß ausgebildete Schneidkronenbefestigung 1 in einer Schnittdarstellung mit zwei zueinander um 90° versetzte Teilschnitte, wobei die Schnittgerade, welche durch beide Schnittebenen gebildet ist, koaxial durch die Achse A eines Schraubbolzens 4 verläuft. Die erfindungsgemäße Schneidkronenbefestigung umfasst eine Schneidkronenhalterung 3, an welche eine Schneidkrone 2 angelegt ist, wobei an der der Schneidkronenhalterung abgewandten Stirnseite der Schneidkrone ein Gewindeeinsatz 5 eingesetzt ist, welcher in Einbaulage mit dem Schraubbolzen 4 verschraubt ist zur axialen Sicherung der Schneidkrone 2 an der Schneidkronenhalterung 3.

Die Schneidkronenhalterung 3 kann in der beschriebenen Ausführungsform zur Befestigung, insbesondere durch Verschwei-βen, an einem Zerkleinerungsrotor einer Zerkleinerungsvorrichtung ausgebildet sein. In der Regel sind auf dem Zerkleinerungsrotor über dessen gesamte Wirkbreite und häufig umfänglich versetzt eine Vielzahl derartiger Schneidkronenbefestigungen 1 angebracht. Beispielsweise kann ein solcher Zerkleinerungsrotor jeweilige rippenartige Ausnehmungen aufweisen, in welche jeweils eine zur Ausnehmung komplementäre Anlageflächen aufweisende Schneidkronenhalterung 3 eingesetzt und am Rotor verschweißt ist, derartig, dass eine abgenutzte Schneidkrone durch Lösen der beschriebenen Schraubverbindung ausgetauscht werden kann.

Figur 2 zeigt eine Explosionsdarstellung der Bauteile der Figur 1 zur Gestaltung der erfindungsgemäß ausgebildeten Schneidkronenbefestigung 1. Die Schneidkronenhalterung 3 weist an ihrer, der Schneidkrone 2 zugewandten Stirnseite eine hier ebene Anlagefläche 31 auf zur Anlage einer komplementär gestalteten Anlagefläche 23 der Schneidkrone 2. Die Schneidkronenhalterung 3 weist zwischen ihren sich gegenüber liegenden Stirnseiten eine Durchführung oder Bohrung 30 auf, durch die sich im Einbauzustand der Schraubbolzen 4 mit seinem Bolzengewinde 41 hindurch erstreckt, wobei in der beschriebenen Ausführungsform die Länge des Bolzengewindes 41 der Summe der Länge der Durchführung 30 der Schneidkronenhalterung 3 und der Länge der Halterausnehmung 35 der Schneidkrone 2 entspricht, und sich die Halterausnehmung 25 zwischen der ebenen Anlagefläche 23 und der gegenüber liegenden Stirnseite bzw. -fläche erstreckt, welche hier eine Spanfläche 21 darstellt.

Die Halteausnehmung 25 ist in der beschriebenen Ausführungsform über ihre gesamte Längserstreckung in Bezug auf die Außenmantelflächen des Gewindeeinsatzes 5 als Formschlussfläche ausgebildet.

In der beschriebenen Ausführungsform umfasst der Gewindeeinsatz 5 ein durchgehendes Gewinde 56, das komplementär zum Bolzengewinde 41 des Schraubbolzens 4 ausgebildet ist. Der Kopfbereich des Gewindeeinsatzes 5 mit einer axialen Erstreckung Lk ist hier rein rotationssymmetrisch ausgebildet und umfasst ausgehend von der Kopfstirnseite 57 des Gewindeeinsatzes 5 einen rein zylinderförmigen Abschnitt 51, an den sich ein Konusabschnitt 52 anschließt, an dessen axialem Ende sich der Schaftabschnitt 53 über eine axiale Erstreckung Ls anschließt. Zur Bereitstellung eines axialen Formschlusses mit der Schneidkrone weist diese ausgehend von der Spanfläche 21 zur Bereitstellung der Halteausnehmung 25 zunächst eine rein zylindrische Begrenzungsfläche 22a auf, an welche sich in komplementärer Gestaltung zum Konus 52 des Gewindeeinsatzes eine konusförmige Begrenzungsfläche 22b anschließt. Der Schaftabschnitt 53 mit der axialen Länge Ls des Gewindeeinsatzes 5 ist komplementär zur Begrenzungsfläche 22c der Schneidkrone 2 ausgebildet, im vorliegenden Fall im Querschnitt als Polygonform mit abgerundeten Ecken, an welchen sie die Kanten des Polygons ineinander übergehen. In der beschriebenen Ausführungsform ist die Länge der Halteausnehmung 25 an die Gesamthöhe des Gewindeeinsatzes 5, d.h. die Summe Ls und Lk angepasst bzw. zu dieser identisch. In der beschriebenen Ausführungsform ist die Außenmantelfläche des Schaftes 53 komplementär zur Begrenzungsfläche 22c der Schneidkrone 2 ausgebildet, sodass in diesem Längsabschnitt ein rotatorischer Formschluss zwischen dem Gewindeeinsatz 5 und der Schneidkrone 2 in Einbaulage vorliegt. Insbesondere kann vorgesehen sein, dass die Begrenzungsfläche 22c der Halteausnehmung 25 und in komplementärer Weise die Außenmantelfläche des Schaftes 53 über deren gesamte Längserstreckung einen im Wesentlichen identischen Querschnitt senkrecht zur Längsrichtung aufweisen, sodass in dieser beschriebenen Ausführungsform in Einbaulage der Bauteile über die axiale Strecke Lk ein rein axialer Formschluss und über die axiale Länge Ls ein rein torsionaler, d.h. rotatorischer Formschluss zwischen Schneidkrone 2 und Innengewinde 5 vorliegt.

In einer nicht dargestellten Ausführungsform kann auch vorgesehen sein, dass sich die radiale Erstreckung der Außenmantelfläche des Schaftes 53 in Längsrichtung verändert und in entsprechender komplementärer Weise die Begrenzungsfläche 22c, sodass in dieser Ausführungsform über den axialen Abschnitt Ls sowohl ein torsionaler als auch ein axialer Formschluss zwischen der Schneidkrone 2 und dem Gewindeeinsatz 5 vorliegt.

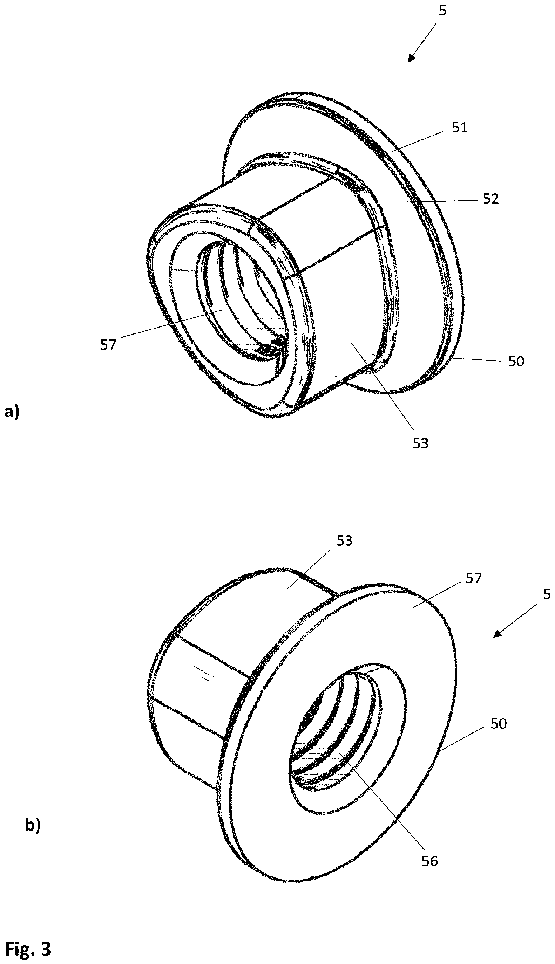

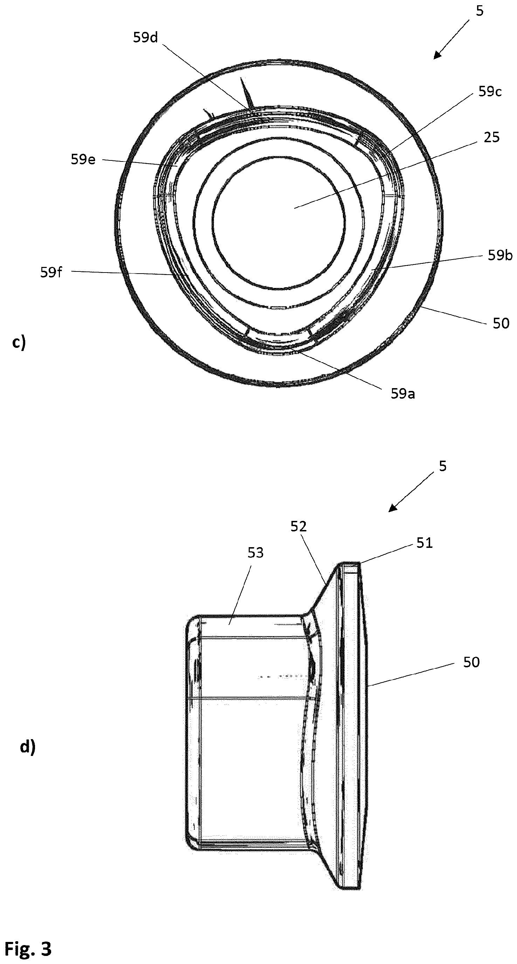

Insbesondere die Formschlussgestaltung der Schneidkrone 5 und damit auch die komplementär dazu ausgebildete Gestaltung der Halteausnehmung der Schneidkrone geht aus den Darstellungen der Figuren 3a - d detaillierter hervor, welche den Gewindeeinsatz 5 der beschriebenen erfindungsgemäß gestalteten Schneidkronenbefestigung in unterschiedlichen Ansichten wiedergeben. Insbesondere aus Figur 3c ist ersichtlich, dass sich im Querschnitt senkrecht zur Achse die äußere Mantelfläche des Schaftes 53 in der beschriebenen Ausführungsform aus einer Mehrzahl von gekrümmten und in Umfangsrichtung aufeinanderfolgenden Flächenabschnitten 59 a-f zusammensetzt. Da die aufeinanderfolgenden Umfangsflächen unterschiedliche Krümmungsradien aufweisen, resultiert ein rotatorischer Formschluss zwischen diesen Umfangsflächen und dem komplementär zu der Mantelfläche des Schaftes 53 ausgebildeten Längsabschnitts Ls der Halteausnehmung 25 der Schneidkrone, siehe Figuren 1, 2.

### Bezugszeichenliste

- 1: Schneidkronenbefestigung
- 2: Schneidkrone
- 3: Schneidkronenhalterung
- 4: Schraubbolzen
- 5: Gewindeeinsatz
- 20a,b,c: Schneidkante
- 21: Spanfläche
- 22a,b,c: Begrenzungsfläche
- 23: Anlagefläche
- 25: Halteausnehmung
- 30: Durchführung
- 31: Anlageflächen
- 32: Bolzenkopfaufnahme
- 40: Bolzenkopf
- 41: Bolzengewinde
- 50: Kopf
- 51: Zylinderabschnitt
- 52: Konus, Konusabschnitt
- 53: Schaft, Schaftabschnitt
- 54: Mantelfläche
- 56: Gewinde
- 57: Stirnfläche
- 59a-f: Umfangsflächenabschnitt des Schaftes
- A: Achse
- Lk: Kopflänge
- Ls: Schaftlänge

## Patentansprüche

1. Schneidkronenbefestigung (1) zur formschlüssigen und verdrehsicheren Befestigung einer Schneidkrone (2) an einer dieser zugeordneten Halterung einer Zerkleinerungsvorrichtung, insbesondere an einem Rotor einer Zerkleinerungsvorrichtung, umfassend eine Schneidkrone (2), eine der Schneidkrone (2) zugeordnete Schneidkronenhalterung (3), einen Schraubbolzen (4) und einen Gewindeeinsatz (5) mit einem Kopfabschnitt und einem Schaftabschnitt, wobei der Gewindeeinsatz (5) ein zu dem Außengewinde des Schraubbolzens (4) komplementäres Innengewinde (5) aufweist und die Schneidkronenhalterung (3) eine Durchführung (30) zur Aufnahme des Schraubbolzens (4) aufweist, und in Einbaulage der Gewindeeinsatz (5) in axialer und tangentialer Richtung formschlüssig in einer Halteausnehmung (35) der diesem zugeordneten Schneidkrone (2) angeordnet ist, **dadurch gekennzeichnet, dass** die Formschlussgestaltung einer Mantelfläche des Gewindeeinsatzes (5) zur Halteausnehmung der zugeordneten Schneidkrone 2) über die gesamte Längserstreckung des Gewindeeinsatzes verläuft, wobei der Gewindeeinsatz über die Längserstreckung des Kopfabschnittes rotationssymmetrisch zur Bereitstellung eines axialen Formschlusses zur Halteausnehmung ausgebildet ist, und zumindest über einen Längsteilabschnitt eine konische Mantelfläche aufweist, die in Einbaulage mit einem komplementär gestalteten konischen Aufnahmeabschnitt der Halteausnehmung korrespondiert und der Gewindeeinsatz im Bereich der Längserstreckung des Schaftabschnittes nichtrotationssymmetrisch zur Bereitstellung eines rotatorischen Formschlusses zur Halteausnehmung ausgebildet ist.

2. Schneidkronenbefestigung nach Anspruch 1, **dadurch gekennzeichnet, dass** sich die Halteausnehmung (35) von einer Oberfläche, insbesondere einer Spanfläche der Schneidkrone (2) zu einer dieser gegenüberliegenden Oberfläche erstreckt.

3. Schneidkronenbefestigung nach Anspruch 1 oder 2, **dadurch gekennzeichnet, dass** der Kopfabschnitt des Gewindeeinsatzes in Längsrichtung einen in Einbaulage der Spanfläche der Schneidkrone zugewandten zylinderförmigen Abschnitt aufweist, an welchen sich in koaxialer Ausrichtung der konusförmige Abschnitt anschließt.

4. Schneidkronenbefestigung nach Anspruch 1, 2, oder 3 **dadurch gekennzeichnet, dass** der Gewindeeinsatz (5) entlang der Längserstreckung seines Schaftabschnittes einen variablen Abstand seiner Mantelfläche senkrecht zur Achse seines Schraubgewindes aufweist.

5. Schneidkronenbefestigung nach Anspruch 1, 2, oder 3 **dadurch gekennzeichnet, dass** der Gewindeeinsatz in Einbaulage in der Längserstreckung seines Schaftes zu zugeordneten Abschnitten der Halteausnehmung in axialer Richtung formschlussfrei ist.

6. Schneidkronenbefestigung nach einem der vorangegangenen Ansprüche, **dadurch gekennzeichnet, dass** der Gewindeeinsatz (5) festsitzend z.B. mittels Klemmen, Erzeugen eines Presssitzes, Verstemmen oder Kleben in der Halteausnehmung (35) der Schneidkrone (2) angeordnet ist.

7. Schneidkronenbefestigung nach einem der vorangegangenen Ansprüche, **dadurch gekennzeichnet, dass** der Gewindeeinsatz (5) in Einbaulage an einem, zumindest einer Spanfläche der zugeordneten Schneidkrone zugewandten Stirnseitenabschnitt eine Stirnfläche aufweist, welche die zumindest eine Spanfläche der Schneidkrone stetig fortführt und/oder ergänzt zur Vermeidung von durch Kanten fehlgeleiteten Spänen.

8. Schneidkronenbefestigung nach einem der vorangegangenen Ansprüche, **dadurch gekennzeichnet, dass** der Schraubbolzen 4) in Einbaulage an einem, zumindest einer Spanfläche der zugeordneten Schneidkrone zugewandten Stirnseitenabschnitt eine Stirnfläche aufweist, welche die die Stirnfläche des Gewindeeinsatzes und damit die zumindest eine Spanfläche der Schneidkrone stetig fortführt und/oder ergänzt zur Vermeidung von durch Kanten fehlgeleiteten Spänen.

9. Schneidkronenbefestigung nach einem der vorangegangenen Ansprüche, **dadurch gekennzeichnet, dass** das Innengewinde des Gewindeeinsatzes als Sacklochgewinde ausgeführt ist.

10. Schneidkronenbefestigung nach einem der vorangegangenen Ansprüche, **dadurch gekennzeichnet, dass** der Gewindeeinsatz und die zugeordnete Schneidkrone aus zueinander unterschiedlichen Materialien ausgebildet sind, wobei das Material des Gewindeeinsatzes eine höhere Duktilität als das Material der Schneidkrone (2) aufweist.

11. Schneidkronenbefestigung nach einem der vorangegangenen Ansprüche, **dadurch gekennzeichnet, dass** der Schaft des Gewindeeinsatzes in einem Schnitt quer zur Längsachse zumindest mehrere Polygonformabschnitte, insbesondere eine geschlossene Polygonform, aufweist, wobei Ecken des Polygons abgerundet sein können.

12. Schneidkronenbefestigung nach einem der vorangegangenen Ansprüche, **dadurch gekennzeichnet, dass** der Gewindeeinsatz und die zugeordnete Schneidkrone in relativer Einbaulage einer Wärmebehandlung zur Einstellung einer vorgegebenen Endfestigkeit der Schneidkrone unterworfen sind.

13. Schneidkronenbefestigung nach einem der vorangegangenen Ansprüche, **dadurch gekennzeichnet, dass** die Längserstreckung des Kopfabschnittes des Gewindeeinsatzes zumindest 30%, insbesondere zumindest 35 % der gesamten Längserstreckung des Gewindeeinsatz beträgt.

## Claims

1. Cutting crown attachment (1) for the form-locking and torsion-free attachment of a cutting crown (2) to a support associated thereto of a comminuting device, in particular to a rotor of a comminuting device, comprising a cutting crown (2), a cutting crown support (3) associated to the cutting crown (2), a screw bolt (4) and a thread insert (5) with a head portion and a shaft portion, wherein the thread insert (5) includes an inner thread (5) complementary to the outer thread of the screw bolt (4) and the cutting crown support (3) includes a passage (30) for receiving the screw bolt (4) and the thread insert (5) is arranged, in mounting position, by being form-locking in axial and tangential direction in a retaining recess (35) of the cutting crown (2) associated thereto,
**characterized in that** the form-locking configuration of a lateral surface of the thread insert (5) to the retaining recess of the associated cutting crown (2) runs over the entire longitudinal extent of the thread insert, wherein the thread insert is configured rotationally symmetrical over the longitudinal extent of the head portion to provide an axial form-locking with the retaining recess and includes at least over a longitudinal partial portion a conical lateral surface that corresponds, in mounting position, to a complementarily configured conical receiving portion of the retaining recess, and the thread insert is configured without rotational symmetry in the area of the longitudinal extent of the shaft portion to provide a rotational form-locking with the retaining recess.

2. Cutting crown attachment according to claim 1, **characterized in that** the retaining recess (35) extends from a surface, in particular from a cutting face of the cutting crown (2), to a surface opposed thereto.

3. Cutting crown attachment according to claim 1 or 2, **characterized in that** the head portion of the thread insert includes in longitudinal direction a cylindrical portion, turned in mounting position to the cutting face of the cutting crown, that is followed by the conical portion in coaxial alignment.

4. Cutting crown attachment according to claim 1, 2 or 3, **characterized in that** the thread insert (5) includes, along the longitudinal extent of its shaft portion, a variable distance of its lateral surface to the axis of its screw thread.

5. Cutting crown attachment according to claim 1, 2 or 3, **characterized in that**, in mounting position, the thread insert is not form-locking in axial direction to associated portions of the retaining recess in the longitudinal extent of its shaft.

6. Cutting crown attachment according to one of the preceding claims, **characterized in that** the thread insert (5) is tightly fixed in the retaining recess (35) of the cutting crown (2) for example by clamping, producing a press-fitting, calking or bonding.

7. Cutting crown attachment according to one of the preceding claims, **characterized in that** the thread insert (5) includes, in mounting position, an end face on an end side portion facing at least one cutting face of the associated cutting crown, end face that smoothly continues and/or completes the at least one cutting face of the cutting crown for avoiding chips misguided by edges.

8. Cutting crown attachment according to one of the preceding claims, **characterized in that** the screw bolt includes, in mounting position, an end face on an end side portion facing at least one cutting face of the associated cutting crown, end face that smoothly continues and/or completes the end face of the thread insert and thus the at least one cutting face of the cutting crown for avoiding chips misguided by edges.

9. Cutting crown attachment according to one of the preceding claims, **characterized in that** the inner thread of the thread insert is configured as a blind hole thread.

10. Cutting crown attachment according to one of the preceding claims, **characterized in that** the thread insert and the associated cutting crown are made of mutually different materials, wherein the material of the thread insert has a higher ductility than the material of the cutting crown (2).

11. Cutting crown attachment according to one of the preceding claims, **characterized in that** the shaft of the thread insert includes in a section transversely to the longitudinal axis at least several portions with a polygon shape, in particular a closed polygon shape, wherein corners of the polygon can be rounded.

12. Cutting crown attachment according to one of the preceding claims, **characterized in that** the thread insert and the associated cutting crown in relative mounting position are subject to a heat treatment for adjusting a predefined final strength of the cutting crown.

13. Cutting crown attachment according to one of the preceding claims, **characterized in that** the longitudinal extent of the head portion of the thread insert is at least 30%, in particular at least 35% of the entire longitudinal extent of the thread insert.

## Revendications

1. Fixation de couronne de coupe (1) pour la fixation par complémentarité de formes et résistante à la torsion d'une couronne de coupe (2) à un support qui lui est associé d'un dispositif de fragmentation, en particulier à un rotor d'un dispositif de fragmentation, qui comprend une couronne de coupe (2), un support de couronne de coupe (3) associé à la couronne de coupe (2), un boulon fileté (4) et un insert fileté (55) avec un tronçon de tête et un tronçon de tige, l'insert fileté (5) présentant un filet intérieur (5) complémentaire du filet extérieur du boulon fileté (4) et le support de couronne de coupe (3) présentant un passage (30) pour recevoir le boulon fileté (4) et l'insert fileté (5) étant placé, en position de montage, par complémentarité de formes dans le sens axial et dans le sens tangentiel dans un évidement de maintien (35) de la couronne de coupe (2) associée à celui-ci,
**caractérisée en ce que** la configuration de complémentarité de formes d'une surface d'enveloppe de l'insert fileté (5) avec l'évidement de maintien de la couronne de coupe associée (2) s'étend sur l'ensemble de l'étendue longitudinale de l'insert fileté, cependant que l'insert fileté est configuré symétrique en rotation sur l'étendue longitudinale du tronçon de tête pour réaliser une complémentarité de formes axiale avec l'évidement de maintien et présente, au moins sur un tronçon partiel longitudinal, une surface d'enveloppe conique qui, en position de montage, correspond à un tronçon de réception conique de configuration complémentaire de l'évidement de maintien et l'insert fileté est configuré, dans la zone de l'étendue longitudinale du tronçon de tige, sans symétrie de rotation pour réaliser une complémentarité de forme en rotation avec l'évidement de maintien.

2. Fixation de couronne de coupe selon la revendication 1, **caractérisée en ce que** l'évidement de maintien (35) s'étend d'une surface, en particulier d'une face de coupe de la couronne de coupe (2), à une surface qui lui est opposée.

3. Fixation de couronne de coupe selon la revendication 1 ou 2, **caractérisée en ce que** le tronçon de tête de l'insert fileté présente dans le sens longitudinal un tronçon cylindrique tourné, en position de montage, vers la face de coupe de la couronne de coupe, qui est suivi par le tronçon en forme de cône en alignement coaxial.

4. Fixation de couronne de coupe selon la revendication 1, 2 ou 3, **caractérisée en ce que** l'insert fileté (5) présente, le long de l'extension longitudinale de son tronçon de tige, une distance variable de sa surface d'enveloppe perpendiculairement à l'axe de son filetage.

5. Fixation de couronne de coupe selon la revendication 1, 2 ou 3, **caractérisée en ce que** l'insert fileté est, en position de montage, sans complémentarité de formes dans le sens axial avec des tronçons associés de l'évidement de maintien dans l'extension longitudinale de sa tige.

6. Fixation de couronne de coupe selon l'une des revendications précédentes, **caractérisée en ce que** l'insert fileté (5) est placé solidement ajusté dans l'évidement de maintien (35) de la couronne de coupe (2) par exemple par serrage, formation d'un ajustement serré, matage ou collage.

7. Fixation de couronne de coupe selon l'une des revendications précédentes, **caractérisée en ce que** l'insert fileté (5) présente, en position de montage, une surface frontale sur un tronçon de face frontale tourné au moins vers une face de coupe de la couronne de coupe associée, surface frontale qui prolonge sans discontinuité et/ou complète la au moins une face de coupe pour éviter un mauvais acheminement de copeaux dû aux arêtes.

8. Fixation de couronne de coupe selon l'une des revendications précédentes, **caractérisée en ce que** le boulon fileté (4) présente, en position de montage, une sur face frontale sur un tronçon de face frontale tourné au moins vers une face de coupe de la couronne de coupe associée, surface frontale qui prolonge sans discontinuité et/ou complète la surface frontale de l'insert fileté et donc la au moins une face de coupe pour éviter un mauvais acheminement de copeaux dû aux arêtes.

9. Fixation de couronne de coupe selon l'une des revendications précédentes, **caractérisée en ce que** le filet intérieur de l'insert fileté est réalisé comme un filetage borgne.

10. Fixation de couronne de coupe selon l'une des revendications précédentes, **caractérisée en ce que** l'insert fileté et la couronne de coupe associée sont formés en matériaux mutuellement différents, cependant que le matériau de l'insert fileté a une plus grande ductilité que le matériau de la couronne de coupe (2).

11. Fixation de couronne de coupe selon l'une des revendications précédentes, **caractérisée en ce que** la tige de l'insert fileté présente dans une section perpendiculairement à l'axe longitudinal, au moins plusieurs tronçons en forme de polygone, en particulier une forme polygonale fermée, cependant que des coins du polygone peuvent être arrondis.

12. Fixation de couronne de coupe selon l'une des revendications précédentes, **caractérisée en ce que** l'insert fileté et la couronne de coupe associée sont soumis, en position de montage relative, à un traitement thermique pour ajuster une résistance finale prédéfinie de la couronne de coupe.

13. Fixation de couronne de coupe selon l'une des revendications précédentes, **caractérisée en ce que** l'extension longitudinale du tronçon de tête de l'insert fileté est d'au moins 30%, en particulier d'au moins 35% de l'extension longitudinale totale.
